**Europäisches Patentamt**

**European Patent Office**

**Office européen des brevets**

(19)

(11) Veröffentlichungsnummer: **0 061 127**

**A2**

(12) # EUROPÄISCHE PATENTANMELDUNG

(21) Anmeldenummer: **82102119.3**

(22) Anmeldetag: **16.03.82**

(51) Int. Cl.³: **B 65 D 19/02**
**B 62 B 3/00**

(30) Priorität: **23.03.81 DE 3111290**

(43) Veröffentlichungstag der Anmeldung:
**29.09.82 Patentblatt 82/39**

(84) Benannte Vertragsstaaten:
**AT BE CH DE FR GB IT LI LU NL SE**

(71) Anmelder: **EGWA Apothekergenossenschaft eG**
**Im Waldeck 11**
**D-7144 Asperg/Württ.(DE)**

(72) Erfinder: **Hecht, Albin, Dipl.-Betriebswirt**
**Bei der Kelter 3/1**
**D-7120 Bietigheim-Bissingen(DE)**

(74) Vertreter: **Reinhard, Kreutz & Skuhra**
**Leopoldstrasse 51**
**D-8000 München 40(DE)**

(54) Vorrichtung zum Versand von unter sich gleichen Kommissionsbehältern.

(57) Die Erfindung betrifft eine Vorrichtung zum Versand von unter sich gleichen Kommissionsbehältern, die jeweils ein Warensortiment für einen Abnehmer enthalten. Derartige Versandvorrichtungen werden beispielsweise im pharmazeutischen Großhandel benötigt. In dem Lager der Großhandlung werden die jeweils bestellten Waren in je einen Kommissionsbehälter eingegeben, eine Vielzahl von Kommissionsbehältern werden in einen Tourenbehälter gegeben, der Tourenbehälter wird auf ein Auslieferungsfahrzeug geladen, mit welchem die Abnehmer der Reihe nach angefahren und beliefert werden.

Jeder Tourenbehälter ist von wenigstens einer seiner beiden vertikalen Schmalseiten und von wenigstens einer seiner beiden vertikalen Längsseiten aus zugänglich und mittels wenigstens eines horizontalen Fachbrettes bzw. Schienen in wenigstens zwei unter sich gleiche, übereinander angeordnete Fächer unterteilt. Die Tiefe und Höhe jedes dieser Fächer entsprechen der Länge und Höhe der Kommissionsbehälter, während die Länge des Tourenbehälters einem ganzzahligen Vielfachen der Breite der Kommissionsbehälter entspricht. Ferner ist jeweils ein Drucker zum Ausdrucken einer Liste der in dem jeweiligen Tourenbehälter aufeinanderfolgenden Kommissionsbehälter vorgesehen.

_Fig. 4_

- 1 -

B e s c h r e i b u n g

Die Erfindung betrifft eine Vorrichtung zum Versand gemäß
dem Oberbegriff des Patentanspruchs 1.

Derartige Versandvorrichtungen werden beispielsweise im
pharmazeutischen Großhandel benötigt, anhand des pharmazeutischen Großhandels soll nachfolgend auch die Erfindung
beschrieben werden, ohne hierauf beschränkt zu sein.

Bei der Großhandlung gehen laufend Bestellungen der Abnehmer,
hier also der Apotheken, ein. In dem Lager der Großhandlung
werden die verschiedenen, jeweils bestellten Waren (Kommissionen)
in jeweils einen Kommissionsbehälter, beispielsweise in Form
eines Warenkorbes, eingegeben. In diesem Kommissionsbehälter
(Warenkorb) gelangt das bestellte Warensortiment sodann zu der
betreffenden Apotheke, die die Bestellung abgegeben hat.
Natürlich wird nicht jeder Kommissionsbehälter extra zu der betreffenden Apotheke gefahren, sondern Auslieferungsfahrzeuge
fahren in regelmäßigen Touren die Apotheken ab, wobei der
Reihe nach eine Apotheke nach der anderen ihren Kommissionsbehälter mit den bestellten Waren erhält (und eventuell einen
alten Behälter zurückgibt). Die einzelnen Apotheken werden
also auf jeweils einer Tour in vorgegebener Reihenfolge
"angefahren", etwa wie die Stationen einer bestimmten Omnisbuslinie.

- 2 -

Es würde sicherlich die Arbeit des Auslieferungsfahrers erleichtern, wenn die einzelnen Kommissionsbehälter in seinem
Lieferwagen in der gleichen Reihenfolge vorliegen würden, in
der die einzelnen Apotheken der Reihe nach angefahren werden;
der Fahrer brauchte dann nur immer bei jedem Halt an einer
Apotheke den jeweils ersten Kommissionsbehälter auszuliefern.
Diese Arbeitserleichterung ist jedoch bisher nicht (jedenfalls
nicht ohne weiteres) gegeben. Wegen der Unterschiedlichkeit
der einzelnen Warensortimente ist nämlich die Verweilzeit
der einzelnen Kommissionsbehälter in dem Warenlager unterschiedlich lang, die Kommissionsbehälter überholen einander
und/oder legen unterschiedlich lange Wege zurück. Daher kommen
die gefüllten Kommissionsbehälter an der Förderbahn der Warenausgabestelle in zufälliger Reihenfolge an - eine zufällige
Reihenfolge würde sich selbst dann ergeben, wenn die Kommissionsbehälter am Eingang in das Lager in jeweils der gewünschten
Reihenfolge eingegeben werden würden.

Auf der Förderbahn an der Warenausgabestelle müssen die
einzelnen Kommissionsbehälter also nach Touren aussortiert
werden. Hierzu sind die Kommissionsbehälter mit jeweils einem
Zeichen für die jeweilige Tour und auch für den jeweiligen
Abnehmer innerhalb einer bestimmten Tour versehen - indem z. B.
ein Lieferschein außen an dem Behälter angebracht ist, der
diese Zeichen trägt.

Bei verschiedenen Großhandlungen werden die Kommissionsbehälter

- 3 -

an der Förderbahn (Warenausgabestelle) von Hand nach den verschiedenen Touren aussortiert und jeweils in einen Tourenbehälter (fahrbar ausgebildet als sogenannter Tourenwagen) eingegeben.

Es ist allerdings auch bereits eine sogenannte automatische "Versandaussteuerung nach Touren" bekannt. Hierbei sind längs der Förderbahn nebeneinander für jede Fahrtroute eine Beladestation vorgesehen, der einerseits jeweils ein Tourenbehälter und andererseits ein von den erwähnten Zeichen gesteuertes Übergabeorgen (beispielsweise ein pneumatisch betätigter Schieber) zugeordnet ist. Gleichgültig jedoch, ob diese "Versandaussteuerung nach Touren" von Hand oder wie erwähnt mit mechanischen Mitteln erfolgt, innerhalb der einzelnen Tourenbehälter kommen die Kommissionsbehälter weiterhin in zufälliger Reihenfolge an - mit der Folge, daß der Auslieferungsfahrer bei jedem Halt vor einer Apotheke immer erst den jeweiligen Kommissionsbehälter heraussuchen muß. Angesichts der schwierigen Verkehrsverhältnisse, insbesondere beim Parken, ist dies als ziemlich lästig anzusehen. Man könnte natürlich vor dem Beginn jeder Tour die einzelnen Kommissionsbehälter nach der Reihenfolge der Apotheken längs der Tour ordnen, was wohl in der Praxis auch bereits mehr oder weniger geschieht, jedoch ist auch dies relativ umständlich, es ist eben nun ein entsprechender Zeit- und Arbeitsaufwand vor Antritt jeder Fahrt erforderlich, dies um so mehr, wenn die einzelnen Kommissionsbehälter innerhalb jedes Tourenbehälters in mehreren Lagen übereinander stehen oder liegen.

Unter diesen Umständen bzw. bei diesem Stand der Technik liegt der Erfindung die Aufgabe zugrunde, eine Versandvorrichtung der eingangs angegebenen Art zu schaffen, bei welcher die Kommissionsbehälter leichter und schneller in die Tourenbehälter eingegeben und aus diesen entnommen werden können und der bei jedem Halt an einer Apotheke (Haltestelle) sogleich einen unmittelbaren Zugriff zu dem entsprechenden Kommissionsbehälter erlaubt. Die Lösung dieser Aufgabe ist in dem Kennzeichnungsteil des Patentanspruchs 1 angegeben.

Die Lösung ist also gekennzeichnet durch das kombinatorische Zusammenwirken von zwei Haupt-Lösungsmerkmalen, nämlich eines besonderen Tourenbehälters einerseits und eines - bei dem gegenwärtigen Stand der Technik auf dem Gebiet der Datenverarbeitung ohne weiteres möglichen - Gerätes zum Ausdrucken einer Tabelle, die der Reihe nach neben der Nummer der auf einer Route aufeinanderfolgenden Apotheken den jeweiligen Speicherplatz des zugehörigen Kommissionsbehälters innerhalb des Tourenbehälters angibt. Durch einen einzigen Blick auf die Tabelle sieht der Auslieferungsfahrer also bei jedem Halt vor einer Apotheke den jeweiligen Stellplatz, der Fahrer braucht also den jeweiligen Kommissionsbehälter nicht mehr herauszusuchen. Wesentlich bzw. eigenartig bei dieser erfindungsgemäßen Lösung ist der Umstand, daß die einzelnen Kommissionsbehälter nicht etwa der Tour entsprechend der Reihe nach sortiert werden - was natürlich möglich wäre, aber nur unter entsprechendem Aufwand - vielmehr verbleiben die Kommissions-

behälter in der sich zufällig ergebenden Reihenfolge, lediglich mit der Maßgabe, daß mit an sich bekannten technischen Mitteln für die jeweilige Tour - genauer gesagt bei jedem Halt vor einer Apotheke innerhalb einer Tour - der Speicherplatz bzw. Stellplatz des zugehörigen Kommissionsbehälters innerhalb des Tourenbehälters angegeben wird - wobei dieser Stellplatz und damit der Kommissionsbehälter aufgrund des entsprechend gestalteten Tourenbehälters für einen direkten Zugriff, also unmittelbare Entnahme freiliegt.

Besondere Ausgestaltungen, insbesondere des Tourenbehälters sind in den Unteransprüchen angegeben.

Durch einen Gleitbelag oder eine Rollenbahn auf dem Boden jedes Faches wird das Eingeben der Kommissionsbehälter erleichtert.

An jeder Beladestation kann zwischen den Tourenbehälter und der Förderbahn ein Fördermittel (Zubringerförderer) eingeschaltet sein, dessen Ausgang höheneinstellbar ist, entsprechend den verschiedenen Fächern des Tourenbehälters. Beispielsweise kann jeweils eine mit ihrem dem Tourenbehälter zugewandten Ende auf- und abschwenkbare Rollenbahn bzw. ein Transportband vorgesehen sein.

Die - gegenüber den Zubringerförderern ausgerichteten - Tourenbehälter haben an wenigstens einer Stirnseite eine Tür bzw.

Öffnung, durch die hindurch die Kommissionsbehälter der Reihe
nach eingegeben bzw. eingeschoben werden können. An der einen
Längsseite sind die Tourenbehälter zur Entnahme der Kommissionsbehälter zugänglich; beispielsweise kann diese Längsseite
mittels einer Tür oder einer Jalousie verschließbar sein oder
für jeden Stellplatz kann eine separate Tür oder Klappe vorgesehen sein. Letztere Bauweise gestattet eine weitere Automatisierung, dergestalt, daß durch an sich bekannte elektronische
Mittel immer nur die betreffende Klappe oder Tür sich öffnet.

Der Tourenbehälter kann aber auch sozusagen offen ausgebildet
sein, wobei die Kommissionsbehälter durch - gegebenenfalls
auf- und abbewegliche - Leisten, Schienen oder Anschläge
auf ihrem Stellplatz bereitgehalten sind.

Es können auch zwei Tourenbehälter mit ihrer der Abgabeseite
gegenüberliegenden Längsseite miteinander verbunden oder
verbindbar sein bzw. mit einer gemeinsamen Mittelwand vorgesehen sein.

Schließlich wird zweckmäßig noch die Grundfläche der Tourenbehälter angepaßt an die Ladefläche der Transportfahrzeuge, so
daß die Ladefläche optimal ausgenutzt wird.

Anhand der Zeichnung wird nachfolgend ein Ausführungsbeispiel
der Erfindung beschrieben. Es zeigen

Fig. 1 schematisch einen Transportbehälter (Tourenbehälter)
in Perspektive;

Fig. 2 und Fig. 3 schematisch jeweils eine Draufsicht auf
ein Transportfahrzeug, dessen Ladefläche mit drei bzw.
fünf Tourenbehältern besetzt ist;

Fig. 4 eine Seitenansicht der erfindungsgemäßen Vorrichtung
insgesamt;

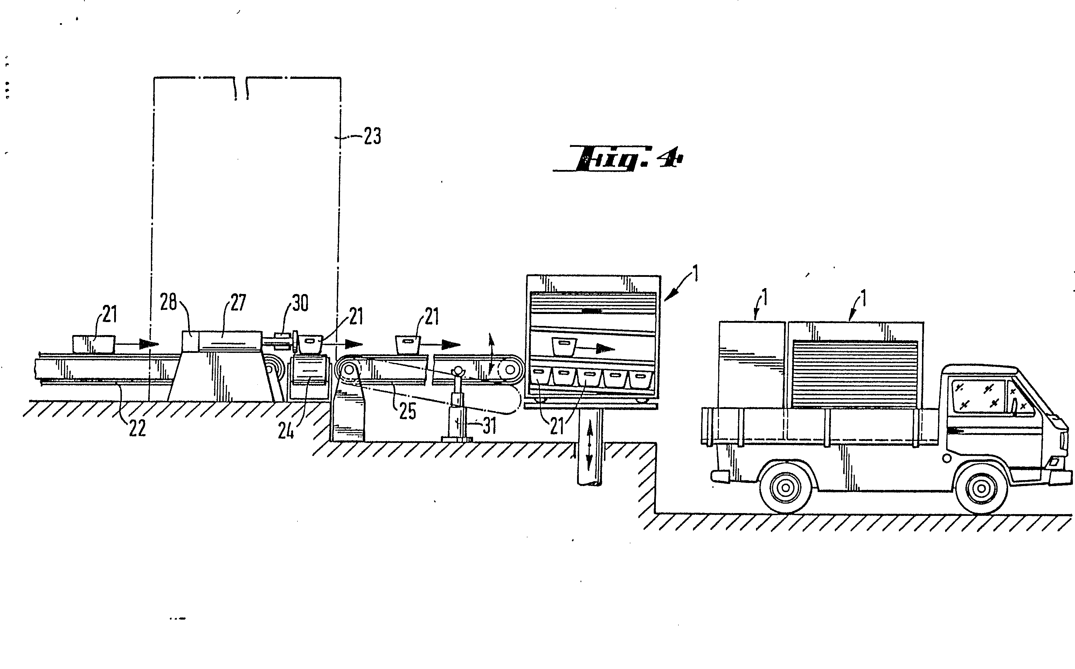

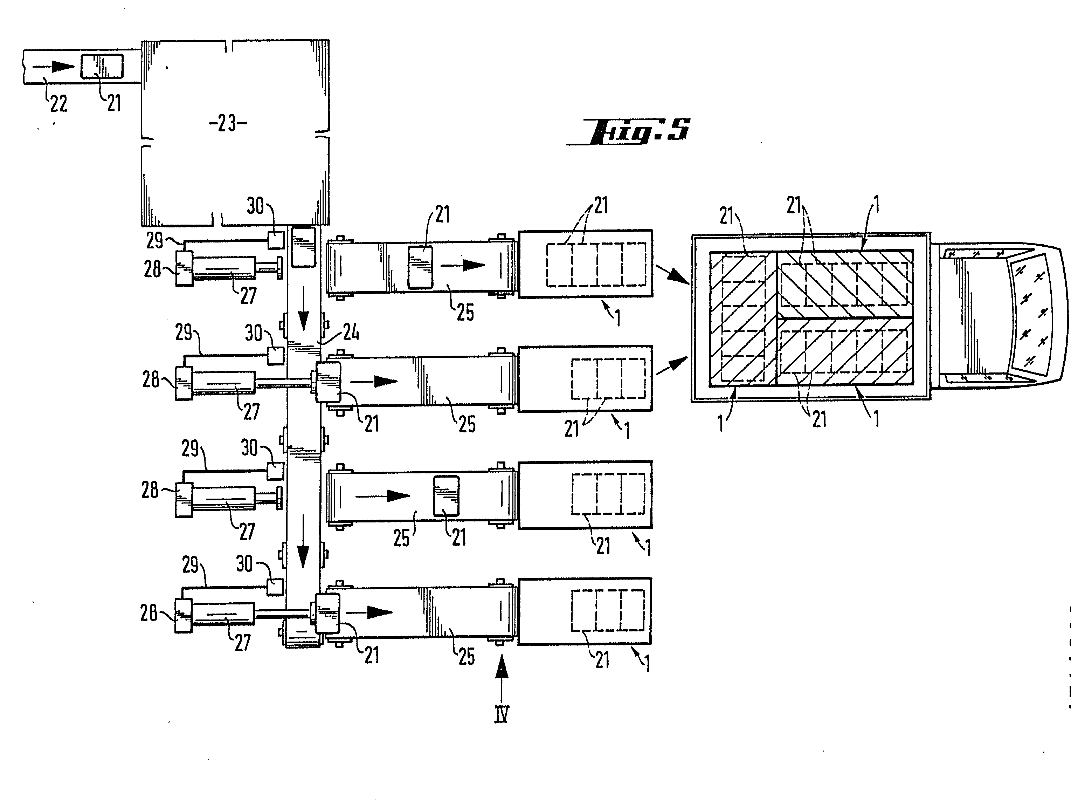

Fig. 5 einen Grundriß auf diese Vorrichtung.

Der Tourenbehälter 1 weist die Umrißform eines rechtkantigen
Kastens mit Boden 2, Decke 3, vorderer Stirnseite 4, hinterer
Stirnwand 5, linke Seitenwand 6 und rechte Seite 7 auf. Durch
zwei horizontale Einbauten 8 ist der Innenraum des Tourenbehälters 1 in drei Fächer von im wesentlichen gleicher Höhe
unterteilt. In jedes Fach paßt eine Reihe von Kommissionsbehältern; die Breite und Höhe jedes Faches entsprechen also
der Länge und Höhe jedes Kommissionsbehälters, während die
Länge des Tourenbehälters (bzw. jedes seiner Fächer) einem
ganzzahligen Mehrfachen der Breite eines Kommissionsbehälters
entspricht. Beispielsweise können die Tourenbehälter 80 cm
breit, 160 cm lang und 144 cm hoch sein. Es können dann in
jeder Reihe fünf Kommissionsbehälter 21 von 30 cm Breite und
50 cm Länge in jedem Fach des Tourenbehälters bequem untergebracht werden, wobei statt der Kommissionsbehälter auch ganze
Pakete oder Packungen eingegeben werden können. Die Tourenbehälter sind an die Ladefläche eines Auslieferungsfahrzeuges angepaßt, wie in Fig. 2 und 3 veranschaulicht.

Von der vorderen Stirnseite 4 und der einen Längsseite 7 ist das Innere des Tourenbehälters 1 zugänglich. Von der vorderen Stirnseite 4 aus werden die Kommissionsbehälter der Reihe nach - quer zu ihrer Längsrichtung - in die einzelnen Fächer eingeschoben und von der einen Längsseite 7 aus können die Kommissionsbehälter - in ihrer Längsrichtung - beliebig entnommen werden. Wesentlich ist dabei, daß in jedem Fach immer nur eine Reihe von Kommissionsbehältern untergebracht sind, alle Kommissionsbehälter sind also von der Seite her zugänglich.

Die Einbauten 8 sowie der Boden 2 bzw. entsprechende Einbauten unmittelbar über  dem Boden, können in Form von Fachbrettern oder aber in Form von Schienen ausgebildet sein, so daß die Kommissionsbehälter seitlichen Halt haben bzw. geführt sind, aber ohne weiteres entnommen werden können. Beispielsweise können auf Fachbrettern ein Reibbelag vorgesehen sein oder aber in entsprechenden Schienen können Laufrollen gelagert sein, auf denen dann die Kommissionsbehälter rollen können.

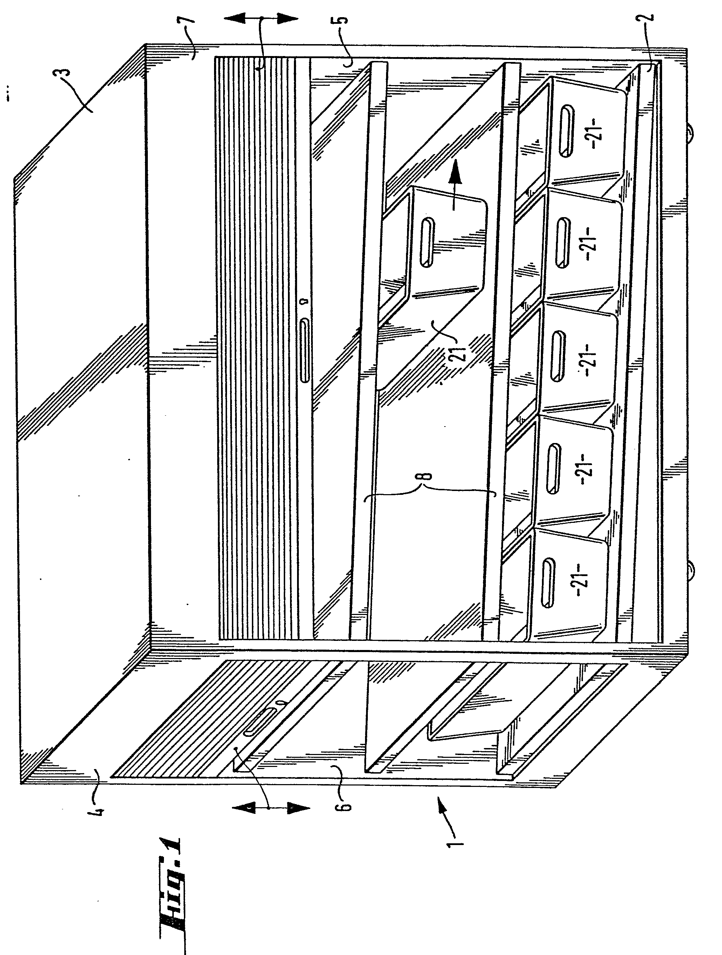

Die vordere Stirnseite 4 sowie auch die eine, in der Zeichnung die rechte Längsseite, können offen sein - sofern nur Vorrichtungen, beispielsweise Riegel zum Festhalten bzw. Freigeben der Kommissionsbehälter getroffen sind. Gemäß Fig. 1 ist die vordere Stirnseite 4 und die rechte Seite 7 durch je eine in Pfeilrichtung auf- und zuziehbare Jalousie verschließbar. Die Einbauten 8 oder Fachbretter sind mit ca. $10^{o}$ in Einschubrichtung

- 9 -

(horizontaler Pfeil) nach unten geneigt. Durch auf- und abbewegliche Anschläge können die Kommissionsbehälter 21 gegen unbeabsichtigtes Verrutschen gesichert sein. Auch können die einzelnen Fachböden eine Neigung quer zu ihrer Längsrichtung haben, so daß die Kommissionsbehälter die Neigung haben, längs der hinteren (in Fig. 1 linken) Seitenwand 6 zu rutschen und nicht etwa längs der vorderen, rechten Seitenwand 7, an der sich die Jalousie befindet.

In Kombination mit diesen Tourenbehältern ist die Vorrichtung im übrigen wie folgt vorgesehen:

Die leeren Kommissionsbehälter 21 laufen an einer Einlaufstation 22 in das Lager 23 ein, werden dort mit den bestellten Waren gefüllt und verlassen das Warenlager auf einer Förderbahn 24 in zufälliger Reihenfolge.

Quer zu der Förderbahn 24 sind nebeneinander eine Reihe von Zubringerförderern 25 angeordnet, welche die Kommissionsbehälter 21 in jeweils einen Tourenbehälter 1 eingeben. Die Tourenbehälter 1 sind in Längsrichtung mit den Zubringerförderern 25 ausgerichtet.

Jedem Zubringerförderer 25 ist ein Übergabeorgan, beispielsweise in Form eines pneumatischen Zylinders 27 auf der gegenüberliegenden Seite der Förderbahn 24 zugeordnet.

- 10 -

Jedes Übergabeorgan 27 ist von je einem Steuergerät 28 gesteuert, welches über eine Signalleitung 29 mit einem Lesegerät 30 verbunden ist, welches auf Kommisionsbehälter 21 jeweils einer bestimmten Tour eingestellt ist.

- 10 -

Bei Erscheinen eines Kommissionsbehälters 21 einer bestimmten Tour wird also über das zugehörige Steuergerät 28 das betreffende Übergabeorgan 27 aktiviert, so daß dieser Kommissionsbehälter auf den entsprechenden Zubringer-Förderer 25 aufgegeben und von diesem in den betreffenden Tourenbehälter 1 eingegeben wird.

Durch je eine Klappe oder Tür kann aber auch der jeweilige Stellplatz separat zugänglich sein.

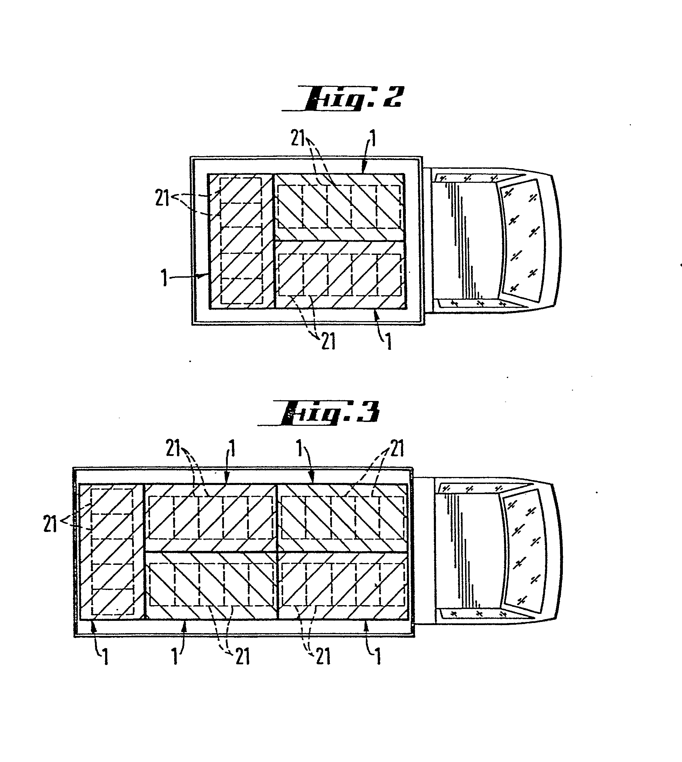

Das vordere, dem Tourenbehälter 6 zugewandte Ende jedes Zubringerförderers 25 ist anhebbar, während das hintere Ende auf dem Niveau der Förderbahn 24 verbleibt. Beispielsweise ist hierzu jeweils ein pneumatischer oder hydraulischer Zylinder 31 vorgesehen. Auf diese Weise kann relativ einfach der Höhenunterschied zwischen den verschiedenen Fächern der Tourenbehälter überbrückt werden. Durch die Neigung der Fachböden ist die erforderliche Schubkraft vermindert - die ohnehin begrenzt ist durch die Reibung zwischen Zubringerförderer 25 und Behältern 21. Ferner ist der jeweilige Tourenbehälter bzw. jeweils eine Stellfläche für die Tourenbehälter etagenweise absenkbar (vertikaler Pfeil in Fig. 4). Dank dieser vertikalen Beweglichkeit kann der Zubringerförderer kürzer sein - oder auch ganz entfallen, sofern die vertikale Absenkung schnell genug erfolgt.

Durch auf- und abbewegliche Anschläge an jedem Fachboden können die Kommissionsbehälter 21 an Ort und Stelle gehalten werden.

Bei dem Beladevorgang liest das Lesegerät 30 die jeweilige Apotheke einer bestimmten Tour - bzw. eine entsprechende Nummer. In einem Speicher des Steuergerätes 28 können die Stellplätze eines jeden Tourenbehälters 1 der Reihe nach zusammen mit der Nummer der jeweiligen Apotheke gespeichert werden. Zum Schluß, wenn der letzte Stellplatz einer bestimmten Tour belegt ist, kann aus den Daten dieses Speichers über an sich bekanntes elektronisches Gerät, beispielsweise einen entsprechend programmierten Mikroprocessor eine Tabelle erstellt und mittels eines angeschlossenen Druckers ausgedruckt werden, in welcher Tabelle die einzelnen Apotheken bzw. ihre Nummern der Reihe nach, wie sie auf der jeweiligen Tour angefahren werden, und neben ihnen bzw. ihnen zugeordnet, die Bezeichnung oder Koordinate des jeweiligen Stellplatzes des zugehörigen Kommissionsbehälters innerhalb des Tourenbehälters angegeben sind. Der Zubringerförderer 25 wird mittels eines ohnehin erforderlichen Zählers jeweils von einem Fach auf das nächste umgesteuert.

0061127

## Bezugszeichenliste

1    Tourenbehälter

2    Boden

3    Decke

4    vordere Stirnseite

5    hintere Stirnwand

6    linke Seitenwand

7    rechte Seitenwand

8    Einbauten/Fachböden


21    Kommissionsbehälter

22    Einlaufstation

23    Lager

24    Förderbahn

25    Zubringerförderer

26

27    Zylinder

28    Steuergerät

29    Signalleitung

30    Lesegerät

31    Zylinder

32    Hebetisch

-1-

P a t e n t a n s p r ü c h e

1.     Vorrichtung zum Versand von unter sich gleichen Kommissionsbehältern, die jeweils ein Warensortiment enthalten und mit jeweils einem Zeichen für einen bestimmten Abnehmer versehen sind,
mittels Kraftfahrzeugen von einer Förderbahn an der Warenausgabestelle eines Warenlagers, an der die Kommissionsbehälter
in zufälliger Reihenfolge ankommen,
zu den längs jeweils einer bestimmten aus einer Vielzahl von
Fahrtrouten aufeinanderfolgenden Abnehmern,
wobei für jede Fahrtroute längs der Förderbahn eine Beladestation vorgesehen ist, an der einerseits ein Transportbehälter
(Tourenbehälter) und andererseits ein von dem an dem Kommissionsbehälter jeweils vorgesehenen, die Fahrtroute und den Abnehmer identifizierenden Zeichen gesteuertes Übergabeorgan zum Übergeben der Kommissionsbehälter von der Förderbahn in die Tourenbehälter vorgesehen sind,

dadurch gekennzeichnet,

daß jeder Tourenbehälter (1) wenigstens von einer seiner beiden vertikalen Schmalseiten (4, 5) und von wenigstens einer
seiner beiden vertikalen Längsseiten (6, 7) aus zugänglich ist
und mittels wenigstens eines horizontalen Fachbrettes bzw.
Schienen (Einbauten 8) in wenigstens zwei unter sich gleiche,
übereinander angeordnete Fächer unterteilt ist, wobei die
Tiefe und Höhe jedes Faches der Länge und Höhe der Kommissionsbehälter (21) und die Länge des Tourenbehälters (1) einem
ganzzahligen Vielfachen der Breite der Kommissionsbehälter (21)
entsprechen,
(27)
und daß jedem Übergabeorgan/ein Zähler und ein Drucker (Steuergerät(28) zum Ausdrucken einer Liste mit den Zeichen der in dem
jeweiligen Tourenbehälter aufeinanderfolgenden Kommissionsbehälter zugeordnet sind.


2.    Vorrichtung nach Anspruch 1,

dadurch gekennzeichnet,

daß der Boden jedes Faches des Tourenbehälters einen Gleitbelag aufweist.


3.    Tourenbehälter nach Anspruch 1,

dadurch gekennzeichnet,

daß auf dem Boden jedes Faches eine Rollenbahn vorgesehen ist.

4. Tourenbehälter nach wenigstens einem der Ansprüche 1 bis 3, dadurch gekennzeichnet,

daß sich über die gesamte Länge und Höhe wenigstens einer der beiden Längsseiten eine Jalousie erstreckt.

5. Tourenbehälter nach wenigstens einem der Ansprüche 1 bis 3, dadurch gekennzeichnet,

daß für jeden Stellplatz in dem Tourenbehälter eine separate Klappe oder Tür an wenigstens einer der beiden Längsseiten vorgesehen ist.

6. Tourenbehälter nach wenigstens einem der Ansprüche 1 bis 5, dadurch gekennzeichnet,

daß die Grundfläche der Tourenbehälter einem echten Bruchteil der Ladefläche eines Transportfahrzeuges entspricht.

7. Tourenbehälter nach wenigstens einem der vorhergehenden Ansprüche,

dadurch gekennzeichnet,

daß zwei Tourenbehälter mit ihren der Abgabeseite gegenüberliegenden Längsseiten (rechte Längsseiten in Fig. 2 und 3) miteinander verbunden oder verbindbar sind, oder daß ein doppelter Tourenbehälter mit gemeinsamer Mittel-Längswand vorgesehen ist.

8. Vorrichtung nach Patentanspruch 1,

dadurch gekennzeichnet,

daß zwischen jedem Übergabeorgan (Zylinder 27) und jeweils einem Tourenbehälter (1) ein Zubringerförderer (25) vorgesehen ist.

9.   Vorrichtung nach Anspruch 8,

dadurch gekennzeichnet,

daß das hintere Ende des Zubringerförderers (25) auf der Höhe der Förderbahn (24) festgehalten ist, während das vordere Ende auf die verschiedenen Etagen des Tourenbehälters (1) anhebbar bzw. absenkbar ist (Hubzylinder 31).

10.   Vorrichtung nach wenigstens einem der vorhergehenden Ansprüche und/oder 9,

dadurch gekennzeichnet,

daß die Fachböden (Einbauten 8) des Tourenbehälters in Einschubrichtung nach unten um ca. $10^{o}$ geneigt sind und daß die Kommissionsbehälter (21) gegen unbeabsichtigtes Verrutschen sichernde, auf- und abbewegliche Anschläge vorgesehen sind.

11.   Vorrichtung nach Anspruch 1 oder 1 und 9,

dadurch gekennzeichnet,

daß jeder Beladestation ein Hebetisch (32) od. dgl. zum etagenweisen Absenken und Anheben der Tourenbehälter zugeordnet ist.

Fig.1

*Fig. 2*

*Fig. 3*

_Fig. 4_

21  28  27  30  21  21  1  1  1

23

22  24  25  31  21

3/4

0061127

Fig.5